# EUROPEAN PATENT APPLICATION

(11) **EP 1 785 218 A1**
(43) Date of publication of application: **16.05.2007**
(21) Application number: 05110699.5
(22) Date of filing: 14.11.2005
(51) Int. Cl.: B23P 13/00, A47B 95/04, F16B 12/50

(54) **Process to manufacture a corner element for furniture**

(71) Applicant: Biemmegi di Fraternali Bruno, Bertuccioli Domenico E Dini Giacomo S.n.c., 61100 Pesaro (IT)
(72) Inventor: DINI, Giacomo, 47841, CATTOLICA (RIMINI) (IT)
(74) Representative: Faggioni, Carlo Maria

(57) **Abstract**

A process to manufacture a corner element (1) for furniture is disclosed, in which a rod of the material from which said element is obtained is turned or milled and divided into sectors. Preferably, pins (3, 4, 5, 6) are obtained from a rod different from the one used to obtain body (2) of said element (1), of the same or of a different material, and they are successively applied to said body (2).
A corner element obtained through said process is also described.

## Description

The present invention refers to a process to manufacture a corner element for furniture, apt to protect the corners of furniture such as tables or the like.

Corner elements to protect the corners of furniture have been known for a long time. They substantially consist of a metal piece in the shape of a cylinder sector (usually about a quarter) or of another shape, such as parallelepipeds and prisms, generally having a smooth surface. For the fixing thereof to the piece of furniture or to an element thereof, the corner element provides pins, integral with the edges of the same corner element, which may be forced into the wood of the piece of furniture or secured by screws or glue.

Generally, the manufacture of these corner elements is accomplished by turning or milling a metal rod, obtaining the pins from the same rod through milling.

A process of this type implies relatively time-consuming machining, with copious swarf production, which must be disposed of, or at least cast.

The drawbacks set forth above are brilliantly solved by the present invention, which refers to a process to manufacture a corner element for furniture, characterised in that a rod of the material from which said element is obtained is turned or milled and divided into sectors.

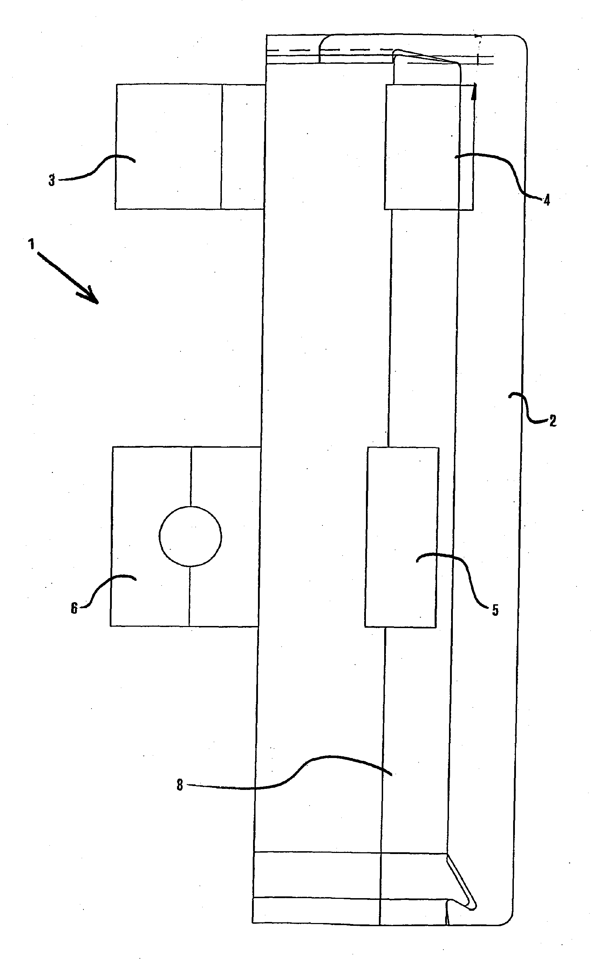

The present invention will now be described in greater detail with reference also to the sole drawing enclosed, which shows an element as manufactured according to the present invention.

Element 1, which is to be manufactured by the process of the present invention, comprises a body 2 which, in the drawing, is a cylinder sector, but which may have different shapes, and a series of pins 3, 4, 5 and 6. The pins may also be replaced by holes.

According to the present invention, one or more bars, usually of a metal material, such as iron, steel, stainless steel, aluminium and chromium-plated steel, are joined together and turned or milled and divided into cylinder sectors or another suitable solid shape, by a single machining known per se. A plurality of bodies 2 is thereby obtained, with an extremely limited production of swarves. Inside body 2 a body 8 is applied, of the same or of a different material than body 2 - plastic materials may also be used - which integrally carries pins 3, 4, 5, 6. In order to obtain element 1, it is sufficient to apply to body 2, in any known manner, body 8 with pins 3, 4, 5 and 6. The application may occur by welding, gluing, screwing, press-fitting, plugging into suitable housings, or by any other suitable method.

The process according to the present invention allows to obtain corner elements 1 with pins applied - rather than integrally mounted - with the same opportunities of being used as those of the known art, reducing swarf production and consequent machining, which affect costs and create disposal problems. Moreover, manufacture is much simpler and quicker than the traditional method, with further resulting saving. Furthermore, the method is extremely simple to be implemented, it allows speeding up of manufacture and is within reach of any person skilled in the field. An equivalent method is that of welding together four bars, so as to simultaneously obtain four elements 1 through a single turning or milling operation, as is obtained by turning or milling a rod and sectioning it into four elements 1. The pins may further be applied directly to body 2, without using a body 8.

## Claims

1. Process to manufacture a corner element (1) for furniture, **characterised in that** a rod of the metal from which said element is obtained is turned or milled and divided into sectors.

2. Process as in claim 1), **characterised in that** pins (3, 4, 5, 6) are obtained from a rod different from the one used to obtain the body (2) of said element (1), of the same or of a different material, and they are subsequently applied to said body (2).

3. Process as in claim 2), **characterised in that** said application of said pins (3, 4, 5, 6) is accomplished by welding, gluing, screwing or press-fitting.

4. Process as in claim 1) or 2), **characterised in that** said pins (3, 4, 5, 6) are carried by a further body (8), which is in turn applied to body (2) of said element (1).

5. Process as in any one of the previous claims, **characterised in that** it includes the preliminary step of obtaining a rod by joining smaller bars.

6. Process as in claim 5), **characterised in that** said joining of said bars occurs by welding.

7. Corner element (1) for furniture, consisting of a body (2) and of one or more pins (3, 4, 5, 6), **characterised in that** said pins (3, 4, 5, 6) are applied to said body (2).

8. Corner element (1) as in claim 7), **characterised in that** said pins (3, 4, 5, 6) are carried by a further body (8), applied to body (2) of element (1).

9. Corner element as in claim 8), **characterised in that** said further body (8) is made of a plastic material.

10. Corner element as in claim 8) or 9), **characterised in that** said further body (8) is joined to body (2) by element (1) by welding, gluing, screwing, press-fitting, plugging into suitable housings.

11. Corner element (1) as in any one of claims 4) to 10), **characterised in that** said pins (3, 4, 5, 6) are applied by welding, gluing, screwing or press-fitting.

12. Corner element as in any one of claims 4) to 11), **characterised in that** it is made of a metal material.

13. Corner element (1) as in claim 12), **characterised in that** said metal material is chosen from the group consisting of iron, steel, stainless steel, aluminium and chrome-plated steel.
